# EUROPEAN PATENT APPLICATION

(11) **EP 2 647 414 A1**
(43) Date of publication of application: **09.10.2013**
(21) Application number: 12162876.2
(22) Date of filing: 02.04.2012
(51) Int. Cl.: B01D 24/12, B01D 24/42

(54) **Assembly for forming a component of a device for treating a fluid**

(71) Applicant: Brita Professional GmbH & Co. KG, 65232 Taunusstein (DE)
(72) Inventor: Wulff, Timm, 65232 Taunusstein (DE); Floren, Simon, 65620 Waldbrunn (DE)
(74) Representative: van Lookeren Campagne, Constantijn August

(57) **Abstract**

An assembly for forming a component of a device (101;601) for treating a fluid includes a duct (113;213;313;413;513;613) for connection to a port (108;608) of the device and a filter unit having an axially directed passage (116;216;316;416;516;616). The passage (116;216;316;416;516;616) is fluidly connected to the duct (113;213;313;413;513;613) at one end. The filter unit includes a filter medium (115;215;315;415;515;615) arranged around the passage (116;216;316;416;516;616), such that fluid is able to flow radially through the filter medium (115;215;315;415;515;615). The assembly further includes a cover part (114;214;314;414;514;614), including a first wall (118;218;318;418;518;618) extending over at least part of the axial length of the filter unit and surrounding the filter unit at a distance radially to the filter medium (115;215;315;415;515;615) to define a space (119;219;319;419;519;619) between the first wall (118;218;318;418;518;618) and a radially outer face of the filter unit. The space (119;219;319;419;519;619) is open to the fluid at a first end. The cover part (114;;214;314;414;514;614) includes a second wall (120;220;320;420;520;620), extending radially from the first wall (118;218;318;418;518;618) to close the space (119;219;319;419;519;619) at a second end opposite the first end and axially closest to the duct (113;213;313;413;513;613).

## Description

The invention relates to an assembly for forming a component of a device for treating a fluid, the assembly including:
a duct for connection to a port of the device;
a filter unit having an axially directed passage,
wherein the passage is fluidly connected to the duct at one end, and
wherein the filter unit includes a filter medium arranged around the passage, such that fluid is able to flow radially through the filter medium; and
a cover part, including a first wall extending over at least part of the axial length of the filter unit and surrounding the filter unit at a distance radially to the filter medium to define a space between the first wall and a radially outer face of the filter unit, wherein the space is open to the fluid at a first end.

The invention also relates to a device, in particular an exchangeable cartridge, for treating a fluid.

The invention also relates to a method of manufacturing a device for treating a fluid.

The invention further relates to a method of treating a fluid.

DE 32 04 022 A1 discloses a filter cartridge with a coaxial, rotationally symmetric build-up relative to a longitudinal geometric axis. The cartridge is provided with an outer wall, an inner wall and with lids connecting the outer wall and the inner wall at both their ends, at least one of the lids being provided with an outlet passage. The filter cartridge is further provided with an inner space defined by the lids, the outer wall and the inner wall, as well as with an inner space filled with a granulate. An impermeable intermediate wall is provided between the inner wall and the outer wall, positioned at approximately half the radial distance relative to the inner wall and the outer wall and connected at its end region in a medium-tight manner to one of the lids. The outer wall is porous in a section towards a first of the lids and impermeable in a second section towards the other lid. The inner wall is porous in a first section towards a first of the lids and impermeable in its second section towards the other lid.

A problem of the known cartridge is that its design leads to a relatively high resistance to flow and inefficient use of the granular treatment medium. The granular medium at the lower end of the space between the intermediate and outer wall will be exhausted long before the granular medium at the bottom of the ring-shaped cylindrical space between the inner wall and the intermediate wall, thereafter only contributing to the flow resistance of the cartridge. The medium at the bottom of the ring-shaped cylindrical space between the inner wall and the intermediate wall will be bypassed by much of the gas or liquid being treated.

It is an object of the invention to provide an assembly, device and method of the types mentioned above for devices in which the assembly is arranged in a chamber filled with a fluid treatment medium that allow for relatively effective use of the medium arranged in the chamber for a given available volume of the chamber.

This object is achieved by the assembly according to the invention, which is characterised in that the cover part includes a second wall, extending radially from the first wall to close the space at a second end opposite the first end and closest to the duct.

The assembly is adapted to be arranged in a chamber of a device for treating a fluid that is otherwise filled with a fluid treatment medium. The duct is connected to a port of the device. This can be an internal port leading to either an inlet or an outlet port of the device or it can be one of the inlet port or the outlet port itself. The other of the inlet and outlet ports can be arranged at the same end of the device, because the duct will have a wall that is essentially impermeable to the fluid to be treated. Thus, it is not possible for the fluid to take a short path between inlet and outlet. It must travel in axial direction, parallel to the duct, through the chamber from the inlet port to at least the point where the duct connects to the filter unit. There need be no wall in between the outer wall of the duct and the inward-facing wall of the chamber in which the fluid treatment medium is arranged. This means that a relatively large cross-section is presented to the fluid, thus reducing the resistance to flow. Moreover, fluid treatment medium at the same axial position in the chamber is exhausted at an approximately equal rate. An arrangement is possible in which the fluid flows down and up the length of the chamber only once, namely once through the duct and once through the fluid treatment medium. By varying the length of the duct, the contact time with the medium can be set appropriately, which would not be possible if the filter unit were to extend along the entire length of the chamber. Because the cover part is provided, the fluid treatment medium present at the same axial position as the filter unit is also effective in treating the fluid. Depending on the permeability of the first wall in particular, at least a substantial fraction of the fluid is forced to flow all the way to the first end in axial direction, then through the opening or openings of the space between the filter unit and the first wall, and then past the first wall in the opposite axial direction. The pressure drop across the filter medium varies less in axial direction than would be the case if the cover part were not present. Thus, not only is the fluid treatment medium at the same axial position as the end of the filter unit furthest removed from the duct used more effectively, there is also a more even distribution of filtrate along the length of the filter medium over time. In particular where the filter medium is based on sorption, the filter medium will remain effective for a relatively long period of time as a consequence.

In an embodiment, the second wall extends from the first wall to the duct.

In this embodiment, fewer parts are required, because the second wall also closes the annular end face presented by the filter medium at the end that is axially removed from the first end of the space between the first wall and the radially outer face of the filter unit. Moreover, it is relatively easy to mould a generally bell-shaped cover part.

In an embodiment, at least a face of the second wall directed away from the space is inclined such as to extend from the first wall in an axial direction away from the first end of the space and radially inwards.

This embodiment makes more effective use of all of the fluid treatment medium in the chamber, because it helps minimise regions where the fluid is stagnant. Such a space would typically occur if the second wall where to extend at right-angles to the duct. The inclined second wall is optimised for flow past the wall and the duct, so that fluid also passes through the fluid treatment medium situated near the second wall and the duct.

In an embodiment, the passage of the filter unit is closed at an end opposite the end fluidly connected to the duct.

An effect is to facilitate arrangement of the filter medium without creating a bypass. The fluid is forced to flow radially through the filter medium. The filter medium can be arranged in the shape of a cylinder with an annular cross-section, making it relatively easy to manufacture. For example, the filter medium can be an extruded or moulded hollow and porous cylinder comprising an adsorbent such as activated carbon. In another embodiment, the passage of the filter unit can be constituted by an integral extension of a tube forming the duct, the extension being porous or provided with holes, with the filter medium wound around the extension. In this case, the filter medium can be string, a mesh or a woven or non-woven web of material, for example.

In an embodiment, the assembly is a self-supporting assembly.

This embodiment makes the device in which the assembly is installed relatively easy to manufacture in a few steps. It is sufficient to provide an essentially cup-shaped housing part. Either the assembly is held in this housing part whilst it is filled with fluid treatment medium and then closed by a lid with a suitable aperture into which the duct is inserted or to which it is otherwise connected in a fluid-tight manner. The lid is then joined to the housing part, e.g. by welding. Alternatively, the assembly can be joined to the lid separately, and the lid with the attached assembly joined to the filled cup-shaped part subsequently, such that the assembly is submerged in the fluid treatment medium.

In an embodiment, the second wall is essentially impermeable to the fluid to be treated.

Thus, no fluid can flow through the second wall into the space between the filter first wall and the radially outer face of the filter unit. The majority of the fluid must take a route through the space between the first wall and an inward-facing wall of the chamber housing the fluid treatment medium, i.e. through the fluid treatment medium that is arranged in this space. In this way, it is ensured that this portion of the fluid treatment medium is used effectively.

In an embodiment, at least one of the second wall and a section of the first wall located axially closer to the second end of the space than to the first end of the space is provided with at least one region having at least an increased permeability to fluid relative to a remainder of the cover part.

An effect is to create a bypass. This is relevant in case the fluid treatment is effective to remove essentially all of a certain component from the fluid. Where it is desirable to retain a small amount of that component in the treated fluid, a bypass that allows a fraction of the fluid to be exposed to that fluid treatment medium for a relatively short time or not at all is a relatively effective way of keeping a small amount of the certain component in the fluid. Where the section of the first wall located axially closer to the second end of the space than to the first end of the space is provided with at least one region having at least an increased permeability to fluid relative to a remainder of the cover part, the second wall may be essentially impermeable to the fluid to be treated.

In a variant, the at least one region comprises a porous wall section.

Compared to providing one or more apertures in the wall, a more uniform flow field is achieved. Moreover, the pressure-dependency of the flow resistance of a porous wall is more like that of a granular bed, so that the bypass ratio (the fraction of the total amount of fluid that takes the short route through the second or first wall) is relatively independent of the overall pressure difference across the device for treating the fluid. A further effect is that the liquid treatment medium can be kept out of the space between the first wall and the radially outer face of the filter unit, resulting in smaller pressure variations in this space and thus a radial pressure difference across the filter medium that varies relatively little in axial direction.

According to another aspect, the device for treating a fluid according to the invention includes at least one inlet port, at least one outlet port, a chamber housing at least one fluid treatment medium and an assembly according to the invention, arranged in the chamber.

For a given volume, the device makes relatively effective use of all of the fluid treatment medium in the chamber and has a relatively low flow resistance.

In an embodiment, the duct is connected to the outlet port.

Thus, the flow of fluid to be treated is directed radially inwardly through the filter medium. The pressure difference tends to compact the filter medium rather than acting in a direction tending to cause it to disintegrate. Moreover, the flow resistance of the device can be smaller. The filter medium must be selective enough to carry out mechanical filtration that removes fine particles, in particular also particles of liquid treatment medium. However, no such fine filtration is required at the inlet. The inlet can merely be provided with some sort of retaining medium that prevents the liquid treatment medium from floating out in case of substantial decreases in the pressure difference across the device. In the alternative arrangement, there would be both mechanical filtration at the inlet (i.e. in the filter unit) and at the outlet.

In an embodiment, the chamber is at least partially filled with different layers of fluid treatment medium, a first and second layer differ in terms of at least one of the type of fluid treatment medium and the proportions of different types of fluid treatment media in a mixture, and the first layer is located between a radially outward-facing side of the first wall and an inward-facing side of a wall of the chamber, with the second layer located at an axial location at an axial distance to the filter unit.

It is thus possible to provide different types of treatment of the fluid without having to have separate chambers. For example, in a device for treating a liquid such as water, where the liquid flows through the second layer first, the second layer can remove carbonate hardness and the first layer can adjust the acidity of the treated liquid, add minerals or some other substance, etc. A particular effect is achieved if the first layer comprises material effective in softening water, in particular in removing carbonate hardness, and the second layer does not or only comprises material that is not as effective, when a bypass is provided by providing at least one of the second wall and a section of the first wall located axially closer to the second end of the space than to the first end of the space with at least one region having at least an increased permeability to fluid relative to a remainder of the cover part. In this embodiment, because some of the water does not have its carbonate hardness removed as much as the rest, a partial softening is achieved without producing acid, and thus corrosive, water.

According to another aspect, the method according to the invention of manufacturing a device for treating a fluid includes:
providing at least one housing part for forming a chamber;
arranging an assembly according to the invention; and
arranging a fluid treatment medium in the chamber so as to surround the assembly.

As well as resulting in a device that makes relatively efficient use of the available volume of fluid treatment medium in the chamber and has a relatively low flow resistance, this method is also relatively easy to implement.

According to a further aspect, the method of filtering a fluid according to the invention includes the use of a device according to the invention.

The invention will be explained in further detail with reference to the accompanying drawings, in which:
Fig. 1 is a very schematic cross-section of a fluid treatment system including a replaceable cartridge (not drawn to scale);
Fig. 2 is a cross-sectional view of a first assembly for forming a component of the replaceable cartridge;
Fig. 3 is a cross-sectional view of a second assembly for forming a component of the replaceable cartridge;
Fig. 4 is a cross-sectional view of a third assembly for forming a component of the replaceable cartridge;
Fig. 5 is a cross-sectional view of a fourth assembly for forming a component of the replaceable cartridge; and
Fig. 6 is a schematic cross-section of a replaceable cartridge (not drawn to scale) with an assembly providing a bypass.

Fluid treatment systems will be explained herein using the example of a system for treating a liquid, in particular water. Directions are with reference to longitudinal axes as shown in each of the drawings. In the examples to be discussed below, the water treatment system includes a replaceable cartridge 101 and a filter head 102. The filter head 102 is permanently installed at the user's premises and comprises an inlet fitting 103 and an outlet fitting 104 for connection to a supply line (not shown) for supplying water to be treated under pressure and a delivery line (not shown) for delivering treated water to a point of use. The delivery line can be connected to a tap for supplying drinking water or a device such as a dishwasher, a steam cooker, an ice maker or a beverage dispenser or post-mix beverage preparation device, for example.

The cartridge 101 includes a cartridge head 105 for connection with the filter head 102. To this end, the cartridge head 105 in inserted into the filter head 102 and mechanically connected, in the illustrated example using lugs 106 that interact with co-operating recesses (not shown) in the filter head 102. Other means for mechanically connecting the cartridge 101 to the filter head 102 are known and can be used in the present context.

The cartridge head 105 is provided with an inlet port 107 for receiving water to be treated from an outlet port (not shown) of the filter head 102. It is further provided with an outlet port 108 for supplying treated water to an inlet port (not shown) of the filter head 102. The inlet port of the filter head 102 is fluidly connected to the outlet fitting 104, and the outlet port of the filter head 102 is fluidly connected to the inlet fitting of the filter head 102. The filter head 102 can further include a device for measuring the flow of water through the filter head, one or more bypass valves for routing a portion of the untreated water past the cartridge 101 directly to the outlet fitting 104 and the like. In one embodiment, the filter head 102 includes one or more non-return valves that define the direction of flow. Alternatively or additionally, the filter head 102 may include one or more valves for reversing the direction of flow through the cartridge 101 to perform backwashing.

In the illustrated embodiment, a housing of the cartridge 101 is formed by a cup-shaped housing part 109 and a lid 110. The lid 110 is welded to the cup-shaped housing part 109 at flanges 111. Thermal welding or ultrasonic welding can be used. In an alternative embodiment, these two components of the housing of the cartridge 101 are adhesively bonded to each other.

The housing of the cartridge 101 defines a chamber for receiving at least one liquid treatment medium. In the following, it will be assumed that the liquid treatment medium or media are granular in nature. In an alternative, they can include fibres or the like. The granular media in one embodiment comprise sintered or thermally bonded particles formed from smaller particles (powder, chopped fibres or the like, for example) of active material and a binder. The active material will generally be a material for selectively filtering out certain substances in the water, in particular through sorption. Examples include activated carbon, chelating resins, cation exchangers and anion exchangers. Over time, the active material will be exhausted, in the sense that its capacity to retain the substances to be filtered out is depleted. At this point, the cartridge 101 is replaced. The cartridge variants discussed herein are provided with features that help ensure that all of the medium held in the chamber defined by the housing of the cartridge 101 is used to as large extent as possible before the cartridge 101 is replaced, so that there are few or no "pockets" of material with a relatively large remaining capacity.

In the illustrated embodiment, the water flowing in through the inlet port 107 flows into the cartridge at the top and is then distributed by a flow distribution device 112 e.g. in the form of a mat of woven or non-woven fibres, a screen or the like. The flow distribution device 112 equalises the pressure in a radial direction with reference to the longitudinal axis of the cartridge 101.

An assembly forming a component of the cartridge 101 includes a duct 113 connected to an outlet port of the cartridge 101, a filter unit and a cover part 114. The filter unit includes a filter medium 115. The filter medium 115 performs at least a mechanical filtration on the water passing through it, if only to filter out any particles of liquid treatment medium. In an embodiment, the filter medium 115 also removes substances by sorption. The filter medium 115 can include string wound into a module, membranes (e.g. pleated or in the form of a sheet of non-woven material), porous filter blocks and the like.

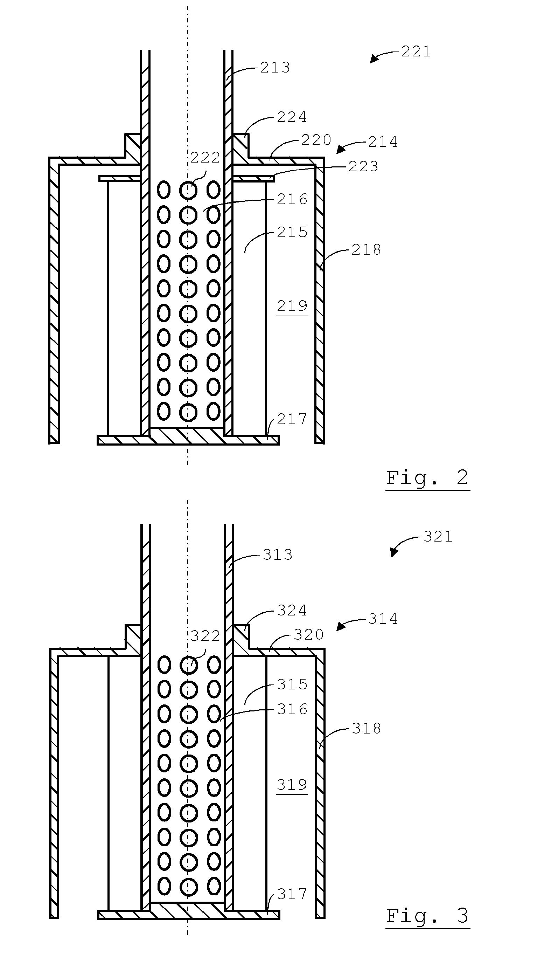

The filter unit includes a central axial passage 116, fluidly connected to the duct 113 at one end (in this case, the upper end). It is noted that the passage can be an integral extension of the duct 113, as will be explained with reference to the filter units shown in more detail in Figs. 2-5. The filter medium 115 is arranged around the central axial passage 116 in such a way that the water to be filtered by it passes through it in a mainly radial direction. In the illustrated embodiment, an end cap 117 closes off the central axial passage 116 at the, in this case lower, axial end, which is the end opposite to the end fluidly connected to the duct 113.

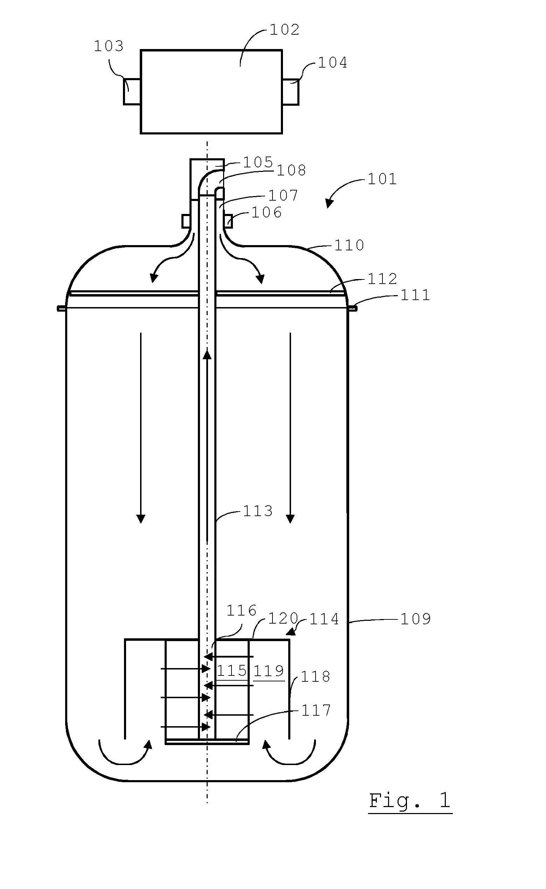

The cover part 114 includes a first wall 118 extending over at least part of the axial length of the filter unit (i.e. the axial extent of the filter medium 115) and surrounding the filter unit at a distance radially to the filter medium 115 to define a space 119 between the first wall 118 and the radially outer face of the filter unit. The space is essentially in the shape of a cylinder with an annular cross-section. As illustrated, the space 119 is completely open at a first end (the lower end in Fig. 1). In another embodiment, this end is closed by a screen permeable to the water, the screen acting to keep the liquid treatment medium out of the space 119.

A second wall 120 of the cover part 114 extends radially inwards from the first wall 118 to close the space at a second end opposite the lower end of the space, the second end being the end closest to the duct 113. Thus, the space is open only at the (in this example) lower end, closest to an end wall of the cup-shaped housing part 109. Consequently, the water is forced to flow into the region of the bed of liquid treatment medium close to this end wall before flowing radially through the filter medium 115. This portion of the liquid treatment medium is therefore also put to use in treating the water, rather than being bypassed by a substantial part of the water.

The pressure distribution within the space is relatively uniform in axial direction, so that the pressure drop across the filter medium 115 does not vary much in axial direction. The filter medium 115 will therefore block relatively uniformly as well.

In the embodiment of Fig. 1, the first and second walls 118, 120 are integral parts of one single component that is approximately bell-shaped. They are impervious to liquid.

Arrows show the direction of flow, which can be dictated, as discussed, by the manner of connection of supply and exit lines to the inlet fitting 103 and outlet fitting 104 and/or by valves in the filter head 102. In an alternative embodiment, valves in the cartridge head 105 determine which port is the inlet port 107 and which the outlet port 108. In a variant, the flow through the cartridge 101 is in the reverse direction. However, this means that the port designated as inlet port 107 in the embodiment of Fig. 1 must be provided with filter means suitable for retaining the particles comprised in the liquid treatment medium, including dust and fragments. This increases the flow resistance, as the filter medium 115 would not be dispensed with. In the illustrated embodiment, the flow distribution device 112 can carry out the role of retaining less dense particles to stop them floating back up through the inlet port 107. Moreover, where the direction of flow is the reverse of that shown in Fig. 1, additional measures may be required to keep the filter medium 115 in place around the central axial passage 116.

To manufacture the cartridge 101, in one embodiment, the cup-shaped housing part 109 is filled with liquid treatment medium. The assembly comprising the duct 113, the filter unit and the cover part 114 is produced. Since it is self-supporting, being essentially rigid, it can be easily handled. The assembly and the flow distribution device 112 are combined with the lid 110, e.g. by sealingly inserting the duct 113 into an appropriate aperture in the flow distribution device 112 and the cartridge head 105. In an embodiment, an interference fit suffices, so that no food-grade adhesives are required. Next, the lid 110 is placed on the cup-shaped housing part 109, with the assembly comprising the duct 113, the filter unit and the cover part 114 being submerged in the liquid treatment medium. The lid 110 is then permanently joined to the cup-shaped housing part 109.

In an alternative method, the assembly comprising the duct 113, the filter unit and the cover part 114 is inserted into the cup-shaped housing part 109 and held in place whilst the cup-shaped housing part 109 is filled with liquid treatment medium. Then, the flow distribution device 112 is pushed over the duct 113 whereupon the lid 110 is connected.

In another embodiment (not shown), the relative axial dimensions of the lid 110 and the cup-shaped housing part 109 are reversed, and the chamber defined by the cartridge housing is filled upside down. In this embodiment, the assembly and flow distribution device 112 would first be connected to the lid 110. Then, the remaining space within the lid 110 would be filled with liquid treatment medium, the (quite shallow) cup-shaped housing part 109 would then be joined to the lid and the whole cartridge 101 turned over.

Fig. 2 shows a simple embodiment of an assembly 221 including the duct 213, the filter unit and the cover part 214.
In this embodiment, the central axial passage 216 is defined by a section of the tube also forming the duct 213. This section is provided with apertures 222. The filter medium 215 is wrapped around the section provided with the apertures 222 in one embodiment. In another embodiment, the filter medium 215 is a self-supporting porous body inserted over the end section of the tube. The central axial passage is closed by the end cap 217. In this case, the end cap 217 extends radially to close both the end of the central axial passage 216 and also to cover an axial end face of the mass of filter medium 215 to ensure that all of the water traverses the filter medium 215 over the same distance. In the illustrated embodiment, a separate second end cap 223 is provided to cover the opposite axial end face of the filter medium 215. The cover part 214 is an integral part, obtainable e.g. by injection moulding. It comprise the first wall 218 which transitions at an axial end opposite a free end of the first wall 218 into the second wall 220, the second wall 220 being approximately at right angles to the first wall 218 and extending radially up to the duct 213, to which it is attached, e.g. by means of adhesive bonding thermal welding or ultrasonic welding. An axially directed extension forms a sleeve 224 to increase the contact surface between the cover part 214 and the duct 213.

Fig. 3 illustrates an assembly 321 that is a variant of the assembly 221 of Fig. 2. In this assembly 321, the cover part 314 is also joined to a tube forming the duct 313 and defining the central axial passage 316. The section defining the central axial passage 316 is similarly provided with apertures 322 around which the filter medium 315 is provided. A first end cap 317 closes off the central axial passage 16 and also covers an axial end face of the mass of filter medium 15. The second end cap 223 is dispensed with. Instead, the second wall 320 of the cover part 14 covers the other axial end face of the mass of filter medium 315 to prevent a bypass of liquid to be filtered. The cover part 314 is otherwise similar in construction to that of Fig. 2.

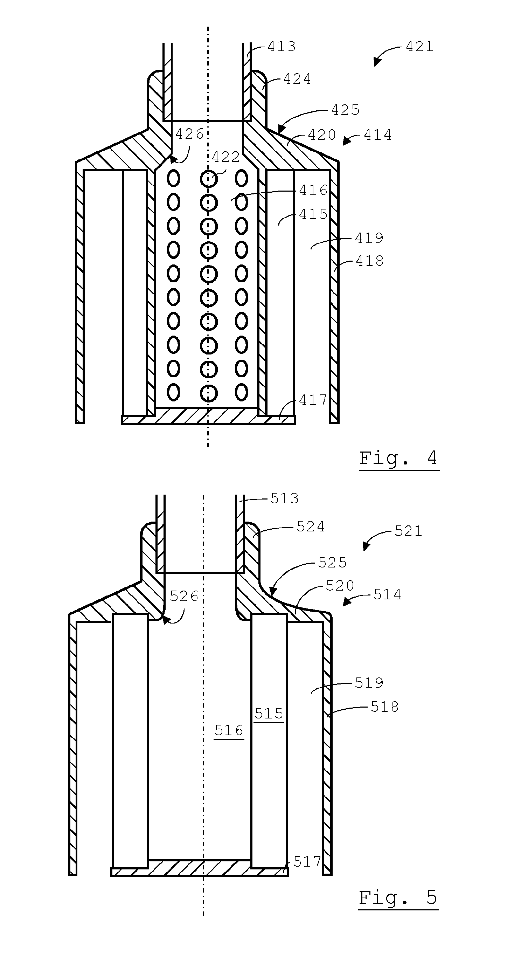

Fig. 4 shows an assembly 421 in which a single monolithic part, e.g. obtainable by injection-moulding, defines the central axial passage 416 and includes the first wall 418 and the second wall 420 as integral parts. A cylindrical section defining the central axial passage 416 is again provided with apertures 422 through which liquid can flow. This cylindrical section supports the filter medium 415, which can be wrapped around it so as to be supported by it or it can be a self-supporting body that is inserted over the cylindrical section with the apertures 422. An end cap 417 closes off the central axial passage 16 at the axial end furthest removed from the duct 413. This end cap 417 also covers the axial end face of the filter medium 415 to ensure that all the liquid has to pass radially through the filter medium 415. An axial end of the duct 13 is received in a socket defined by a sleeve 424 of the part including the first and second walls 418,420. A face 425 of the second wall 420 directed away from the space 419 between the first wall 418 and the filter medium 415 is inclined such as to extend from the first wall 418 in an axial direction away from the space 419 and radially inwards up to the sleeve 424.
In the cartridge 1, this face 425 is directly adjacent the liquid treatment medium. The inclination helps minimise the formation of a zone of stagnant fluid where the second wall 420 joins the duct 413. Due to the Coanda effect, fluid will be entrained along the inclined face 425. This contributes to the overall effect of making use of as much of the liquid treatment medium as possible. It is noted that a second inclined face 426 resulting in a decrease in diameter of the central axial passage 416 to a diameter more closely corresponding to the diameter of the duct 413 similarly optimises the flow through the central axial passage 416 to decrease the flow resistance of the filter unit.

Fig. 5 shows an assembly 521 similarly optimised to achieve a relatively low resistance to flow. The inclined face 525 of this embodiment is curved, rather than essentially straight. Again, a single monolithic part, obtainable e.g. by injection moulding, includes the first wall 518, the second wall 520 and the sleeve 524 that defines the socket for receiving an axial end of the duct 513. However, the filter medium 515 is self-supporting, so that the filter medium 515 itself defines the central axial passage 516. The filter medium 515 can be a porous body, e.g. obtainable by sintering, thermal bonding or extrusion. The filter medium 515 of one variant is layered. Indeed, it can comprise a porous body with a mesh, membrane or layer of woven or non-woven fibres wrapped around it. An end cap 517 is directly bonded to an axial end face of the filter medium 515, e.g. thermally or ultrasonically. The other axial end of the self-supporting body of filter medium 515 is similarly bonded to the monolithic part including the first and second walls 518,520.

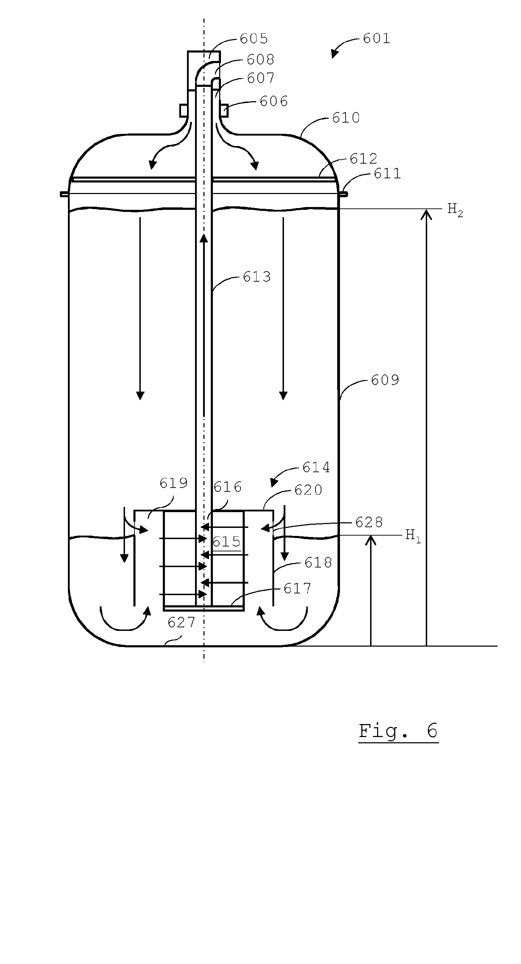

Fig. 6 illustrates a cartridge 601 that is in most respects identical to the cartridge 1 shown in Fig. 1. However, the cover part 614 differs, and there are multiple layers of liquid treatment medium, differing from each other in terms of their constituents and/or the proportions of their constituents in case of a mixture. A first layer of liquid treatment medium extends axially from an end wall 627 delimiting the chamber for holding liquid treatment medium to a first fill level H₁. A second layer of liquid treatment medium extends axially from the first fill level H₁ to a second fill level H₂. The second layer is thus axially at an axial location located at an axial distance to the filter unit comprising the filter medium 615.

The first wall 618 of the cover part 614 is provided with one or more windows 628 that have an increased permeability to liquid relative to a remainder of the cover part 614. In one embodiment, the windows 628 are apertures. In another embodiment, the windows 628 are formed by screens with multiple apertures. In yet another embodiment, the windows 628 are formed by porous regions of the first wall 618. In a variant of the latter embodiment, at least one parameter of the porous region varies, such that the flow resistance varies in axial direction. These parameters can include the porosity, the pore size and the material composition (e.g. such as to affect the wettability of the material).

As shown by the arrows, the windows 628 provide a bypass, so that a fraction of the water does not flow around the free axial end of the first wall 618. In the illustrated embodiment, the axial location and axial extent of the windows 628 is such that water is able to bypass one of the layers of liquid treatment medium altogether. A somewhat smaller effect is, however, already achieved if the first fill level H₁ is at an axial location corresponding to that of the duct 613, because the water flowing through the windows 628 has a lower contact time with the liquid treatment medium that extends up to the first fill level H₁.

In an embodiment, the layer of liquid treatment medium extending up to the first fill level H₁ is more effective in softening water than the layer of liquid treatment medium extending from the first fill level H₁ to the second fill level H₂. The latter layer can comprise a lower proportion of cation exchanger material or none at all, or it can comprise a cation exchanger material that is less effective or requires a longer contact time to achieve a certain efficacy. In this way, a fraction of the water to be treated is not softened as much as a remaining fraction of the water to be treated. Such partially softened water is less acid, making it suitable for certain applications such as the preparation of beverages or use as a heat exchange medium in a heating or cooling circuit.

Any of the cover parts 214,314,414,514 illustrated in Figs. 2-5 can be provided with windows 628 as illustrated in Fig. 6.

The invention is not limited to the embodiments described above, which may be varied within the scope of the accompanying claims.

For example, the first and second walls 18,20 of the cover part 14 can be separate parts bonded together. The first wall 18 and/or the filter medium 15 can vary in radius in axial direction, rather than being straight as illustrated. The relative axial dimensions of the filter unit and the duct 13 can be different from those alluded to by the drawings, in particular where the chamber houses multiple layers of liquid treatment medium.

### LIST OF REFERENCE NUMERALS

- 101,601: cartridge
- 102: filter head
- 103: inlet fitting
- 104: outlet fitting
- 105,605: cartridge head
- 106,606: lugs
- 107,607: inlet port
- 108,608: outlet port
- 109, 609: cup-shaped housing part
- 110, 610: lid
- 111, 611: flanges
- 112, 612: flow distribution device
- 113, 213, 313, 413, 513, 613: duct
- 114, 214, 314, 414, 514, 614: cover part
- 115, 215, 315, 415, 515, 615: filter medium
- 116, 216, 316, 416, 516, 616: central axial passage
- 117, 217, 317, 417, 517, 617: end cap
- 118, 218, 318, 418, 518, 618: first wall
- 119, 219, 319, 419, 519, 619: space
- 120,220,320,420,520,620: second wall
- 221,321,421,521: assembly
- 222,322,422: aperture
- 223: second end cap
- 224,324,424,524: sleeve
- 425,525: inclined face
- 426,526: second inclined face
- 627: end wall
- 628: window

## Claims

1. Assembly for forming a component of a device (1;601) for treating a fluid, the assembly including:
a duct (113; 213; 313; 413; 513; 613) for connection to a port (108;608) of the device;
a filter unit having an axially directed passage (116; 216;316;416;516;616),
wherein the passage (116; 216; 316; 416; 516; 616) is fludly connected to the duct (113; 213; 313; 413; 513; 613) at one end, and
wherein the filter unit includes a filter medium (115; 215; 315; 415; 515; 615) arranged around the passage (116; 216; 316; 416; 516; 616), such that fluid is able to flow radially through the filter medium (115; 215; 315; 415; 515; 615); and
a cover part (114; 214; 314; 414; 514; 614), including a first wall (118; 218; 318; 418; 518; 618) extending over at least part of the axial length of the filter unit and surrounding the filter unit at a distance radially to the filter medium (115; ; 215; 315; 415; 515; 615) to define a space (119; 219; 319; 419; 519; 619) between the first wall (118; 218; 318; 418; 518; 618) and a radially outer face of the filter unit, wherein the space (119; 219; 319; 419; 519; 619) is open to the fluid at a first end, **characterised in that**
the cover part (114; 214; 314; 414; 514; 614) includes a second wall (120;220;320;420;520;620), extending radially from the first wall (118; 218; 318; 418; 518; 618) to close the space (119; 219; 319; 419; 519; 619) at a second end opposite the first end and axially closest to the duct (113; 213; 313; 413; 513; 613).

2. Assembly according to claim 1, wherein the second wall (120;220;320;420;520;620) extends from the first wall (118; 218; 318; 418; 518; 618) to the duct (113; 213; 313; 413; 513; 613).

3. Assembly according to claim 1 or 2, wherein at least a face (425;525) of the second wall (420;520) directed away from the space (419;519) is inclined such as to extend from the first wall (418;518) in an axial direction away from the first end of the space (419;519) and radially inwards.

4. Assembly according to any one of the preceding claims, wherein the passage (116; 216; 316; 416; 516; 616) of the filter unit is closed at an end opposite the end fluidly connected to the duct (113;213;313;413;513;613).

5. Assembly according to any one of the preceding claims, wherein the assembly is a self-supporting assembly.

6. Assembly according to any one of the preceding claims, wherein the second wall (120;220;320;420;520;620) is essentially impermeable to the fluid to be treated.

7. Assembly according to any one of claims 1-5,
wherein at least one of the second wall (620) and a section of the first wall (618) located axially closer to the second end of the space (619) than to the first end of the space (619) is provided with at least one region (628) having at least an increased permeability to fluid relative to a remainder of the cover part (614).

8. Assembly according to claim 7, wherein the at least one region (628) comprises a porous wall section.

9. Device for treating a fluid, in particular an exchangeable cartridge (101;601) for a fluid treatment system, the device including at least one inlet port (107;607), at least one outlet port (108;608), a chamber housing at least one fluid treatment medium and an assembly (221;321;421;521) according to any one of claims 1-8, arranged in the chamber.

10. Device according to claim 9, wherein the duct (113; 213; 313; 413; 513; 613) is connected to the outlet port (108; 608) .

11. Device according to claim 9 or 10, in particular including an assembly (221;321;421;521) according to claim 7 or 8, wherein the chamber is at least partially filled with different layers of fluid treatment medium, wherein a first and second layer differ in terms of at least one of the type of fluid treatment medium and the proportions of different types of fluid treatment media in a mixture, and wherein the first layer is located between a radially outward-facing side of the first wall (618) and an inward-facing side of a wall of the chamber and the second layer is located at an axial location at an axial distance to the filter unit.

12. Method of manufacturing a device (101;601) for treating a fluid including:
providing at least one housing part (109;609) for forming a chamber;
arranging an assembly (221;321;421;521) according to any one of claims 1-8 in the chamber; and
arranging a fluid treatment medium in the chamber so as to surround the assembly (221;321;421;521).

13. Method of treating a fluid, including the use of a device (101;601) according to any one of claims 9-11.
